# EUROPEAN PATENT APPLICATION

(11) **EP 4 206 060 A1**
(43) Date of publication of application: **05.07.2023**
(21) Application number: 23150067.9
(22) Date of filing: 02.01.2023
(51) Int. Cl.: B62D 57/024

(54) **A ROPE MOVING MACHINE AND MULTI-MACHINE MOVING SYSTEM**

(30) Priority: 01.01.2022 CN 202210000130
(71) Applicant: Zhejiang University, Hangzhou, Zhejiang 310027 (CN)
(72) Inventor: Li, Xin, Hangzhou (CN)
(74) Representative: Sun, Yiming

(57) **Abstract**

The present invention discloses a rope moving machine and a multi-machine moving system. The rope moving machine includes a machine body and a rope mechanism and a surface connection mechanism that are connected to the machine body. The rope mechanism includes a rope tightening and loosening mechanism and a rope. The rope tightening and loosening mechanism is connected to the rope. The surface connection mechanism connects the rope to an object to form one or more connection points on the object. The connection point bears a part or all of gravity of the machine body through the rope. The rope tightening and loosening mechanism is capable of changing a length of the rope between the connection point and the machine body. The machine and the system in the present invention imitate a moving mode of silk adhesion and silk spinning by a spider, to resolve technical problems of high power consumption, loud noise, and a limited moving range usually existing in an existing technical solution.

## Description

### TECHNICAL FIELD

The present invention pertains to the field of adsorption and movement technologies, and relates to a rope moving machine and a multi-machine moving system.

### BACKGROUND

When a machine moves and works on an inclined surface, the machine falls due to a component of gravity of the machine in a direction of the inclined surface. To overcome the gravitational component in the direction of the inclined surface, a technician usually mounts an adsorption mechanism on the machine. The invention patent application 202111135155.2 discloses a reverse thrust adsorption robot vehicle. The robot vehicle includes a wheeled mobile vehicle body and a reverse thrust adsorption mechanism, and can move on an inclined or a vertical wall surface. The reverse thrust adsorption mechanism is mounted on the wheeled mobile vehicle body. The reverse thrust adsorption mechanism produces reverse thrust by using a blade that rotates at a high speed, so that a robot is adsorbed onto the wall surface. Contact force is produced between a wheel and the wall surface, and accordingly friction is produced. The friction overcomes the gravity of the robot, and provides driving force for the robot to move. This type of wall-climbing robot has the following disadvantages:

### (1) High energy consumption

The reverse thrust adsorption mechanism needs to always consume energy to maintain adsorption force, so that the robot is adsorbed onto the inclined surface. If the robot vehicle is powered by a portable battery, a life of the battery is greatly shortened due to the high energy consumption of the reverse thrust adsorption mechanism, and consequently the robot vehicle cannot stay and work on the inclined surface for a long time.

### (2) Loud noise

Mechanical movement and airflow movement of the reverse thrust adsorption mechanism produce high-decibel mechanical noise and aerodynamic noise. Greater adsorption force indicates louder noise. When the robot vehicle performs some special working tasks (for example, anti-terrorism reconnaissance) on the inclined surface, the robot vehicle is exposed due to the high-decibel noise.

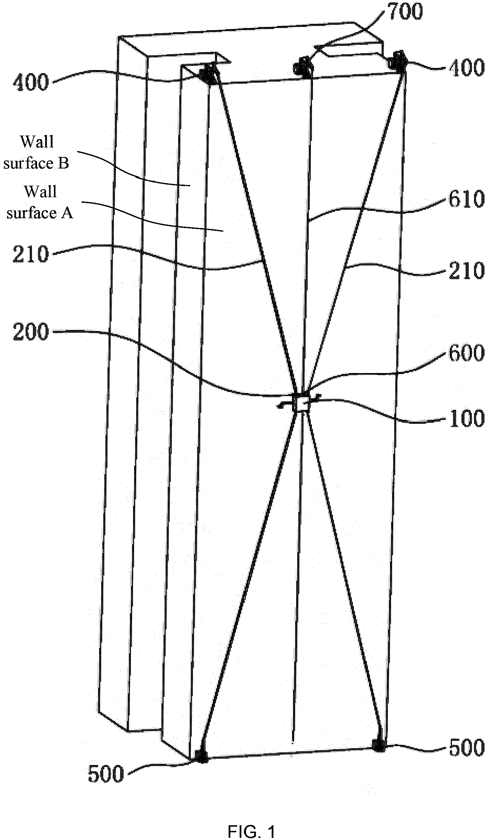

To reduce the energy consumption and the noise, the technician develops a high-altitude working machine suspended by using a rope. For example, a rope winding mechanism is fastened above the inclined surface, and the rope winding mechanism can tighten and loosen the rope. One end of the rope is connected to the working machine. The working machine can move in a suspension direction. To enable the working machine to move on the wall surface in two dimensions, the invention patent application 202110088053.3 further provides a multi-rope suspension solution (FIG. 1). However, a high-altitude working machine suspended by using a plurality of ropes has the following disadvantages:
(1) A plurality of rope winding mechanisms are fastened above the wall surface, resulting in a cumbersome working procedure and high working difficulty.
(2) A moving range of the high-altitude working machine is limited by the rope winding mechanism. For example, in FIG. 1, a high-altitude working machine 100 can laterally move only between two rope winding mechanisms 400. In addition, the high-altitude working machine can move only on one wall surface, and cannot cross an adjacent right-angle wall surface. For example, in FIG. 1, the high-altitude working machine 100 can move only on a wall surface A, and cannot move to a wall surface B.

### SUMMARY

The present invention is intended to provide a rope moving machine and a multi-machine moving system, to overcome disadvantages in the conventional technology. The machine and the system in the present invention imitate a moving mode of silk adhesion and silk spinning by a spider, to resolve technical problems of high power consumption, loud noise, and a limited moving range usually existing in the conventional technology (for example, a robot that moves on an inclined surface).

The present invention achieves the foregoing objective in the following manner:
A rope moving machine is provided. The rope moving machine includes a machine body capable of moving on an object, and further includes a rope mechanism and a surface connection mechanism that are connected to the machine body. The rope mechanism includes a rope tightening and loosening mechanism and a rope. The rope tightening and loosening mechanism is connected to the rope. The surface connection mechanism connects the rope to the object to form one or more connection points on the object. The connection point bears a part or all of gravity of the machine body through the rope. The rope tightening and loosening mechanism is capable of changing a length of the rope between the connection point and the machine body.

Further, the surface connection mechanism may adhere the rope to the object by using adhesive.

Further, the surface connection mechanism may alternatively connect the rope to the object through a mechanical connection. Still further, the surface connection mechanism may nail the rope to the object. The surface connection mechanism may alternatively include one or more hooks, the hooks are fastened to different positions on the rope, and the hook is suspended on the object to form the connection point.

Further, the surface connection mechanism may further include a connection release mechanism, and the connection release mechanism is configured to release a connection between the rope and the object.

Further, the surface connection mechanism may further include a rope clamping mechanism, and the rope clamping mechanism is capable of clamping the rope, so that the rope forms a tensioned part and a slack part.

Further, the machine body further includes an adsorption mechanism, and the adsorption mechanism is configured to adsorb the machine body onto the object.

Further, the machine body further includes a mobile mechanism, and the mobile mechanism is configured to drive the machine body to move on the object.

Further, the surface connection mechanism includes a mechanical arm, an adhesive sprayer, a sprayer push rod, and a rope clamping mechanism, the rope clamping mechanism is configured to clamp the rope, so that the rope forms a tensioned part and a slack part, the mechanical arm is connected to the machine body through a rotating shaft, and the adhesive sprayer and the sprayer push rod are disposed on the mechanical arm to adhere the slack rope to the object.

The present invention provides a multi-machine moving system. The multi-machine moving system includes two or more rope moving machines described above. At least two different rope moving machines are interconnected through a machine connection rope, and a length of the machine connection rope is adjustable.

The rope moving machine and the multi-machine moving system in the present invention have the following advantages over the conventional technology:
The rope moving machine in the present invention can move on a vertical or an inclined object surface of the object without an adsorption mechanism. Even if the adsorption mechanism is used in the rope moving machine in the present invention, the absorption mechanism needs to provide only very weak adsorption force to meet a working requirement. Therefore, the rope moving machine in the present invention includes no high-power adsorption mechanism, and accordingly there is no high-speed mechanical movement and gas flow. In this way, no mechanical loss or fluid flow loss is generated and therefore no mechanical noise or aerodynamic noise is generated, or generated loss or noise is much less than that generated by a machine in the conventional technology. In addition, the rope moving machine in the present invention can connect the rope to a plurality of positions of the object to form a plurality of connection points, and therefore can cross two object surfaces that are not coplanar, and can stay on a vertical or an inclined object surface for a long time with zero power consumption. Further, the multi-machine moving system is formed through cooperation between rope moving machines, and therefore efficient movement on the object can be implemented.

### BRIEF DESCRIPTION OF DRAWINGS

FIG. 1 shows a solution in the conventional technology;
FIG. 2 is a schematic diagram of a side view structure of a rope moving machine according to Embodiment 1 of the present invention;
FIG. 3 is a schematic diagram of a front view structure of a rope moving machine according to Embodiment 1 of the present invention;
FIG. 4 is a schematic diagram of a rope clamping mechanism in a rope moving machine according to Embodiment 1 of the present invention, and is a local top view of FIG. 2;

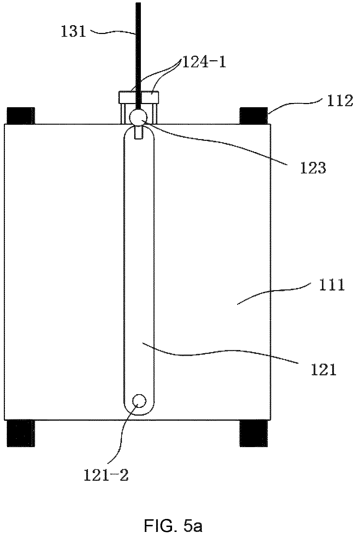

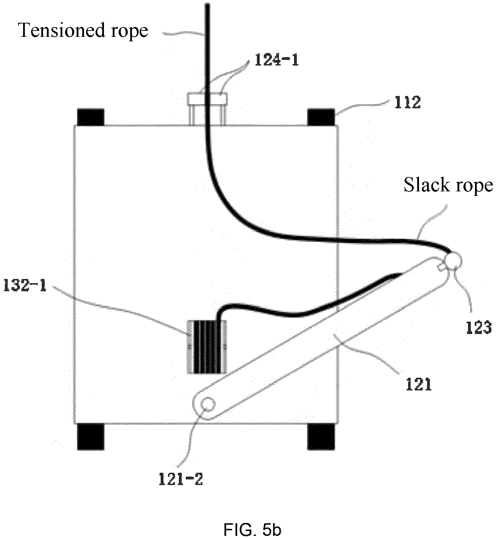

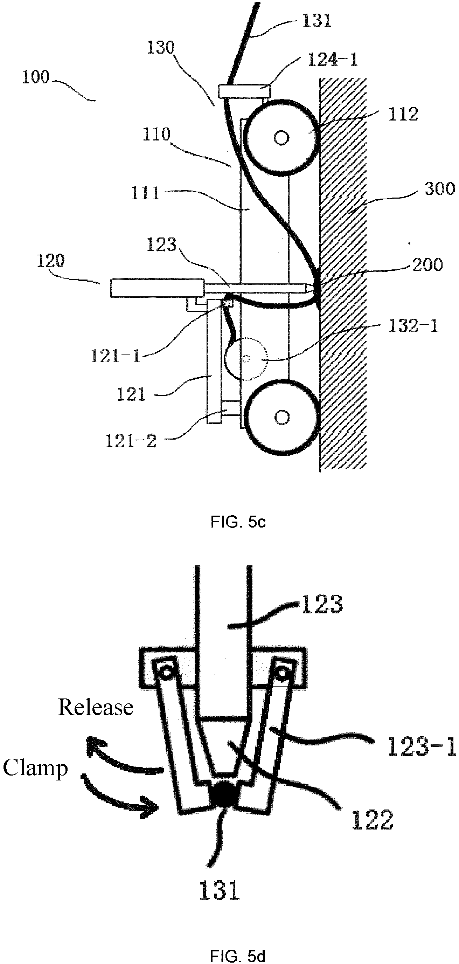

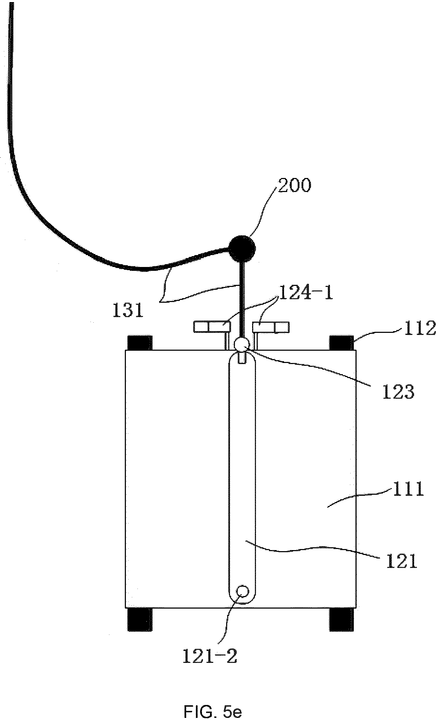

FIG. 5a to FIG. 5e are schematic diagrams of a working process of a rope moving machine according to Embodiment 1 of the present invention, where FIG. 5a is a schematic diagram of a state existing after a rope clamping mechanism clamps a rope, FIG. 5b is a schematic diagram of rotation of a mechanical arm, FIG. 5c is a schematic diagram of a process of forming a connection point, FIG. 5d is a schematic diagram of clipping the rope by a rope clip added to a sprayer push rod, and FIG. 5e is a schematic diagram of a state existing after the rope clamping mechanism releases the rope after the connection point is formed;
FIG. 6 and FIG. 7 are schematic diagrams of connecting a rope and an object surface by using a nail;
FIG. 8a to FIG. 8c are schematic diagrams of a working process of a rope moving machine according to Embodiment 2 of the present invention, where FIG. 8a is a schematic diagram of the rope moving machine on an object surface 1, FIG. 8b is a schematic diagram of moving to an object surface 2 by the rope moving machine, and FIG. 8c is a schematic diagram of a state existing after the rope moving machine forms a new connection point on the object surface 2;
FIG. 9 is a schematic diagram of a structure of a rope moving machine according to Embodiment 3 of the present invention;
FIG. 10 and FIG. 11 are schematic diagrams of a working process of moving from an object surface 1 to an object surface 2 by a rope moving machine according to Embodiment 4 of the present invention, where FIG. 10 is a schematic diagram of a state existing after a mechanical arm rotates, and FIG. 11 is a schematic diagram of a state existing after a mechanical arm plate 2 rotates to a desired position;
FIG. 12 is a schematic diagram of a lateral movement method for a rope moving machine according to Embodiment 5 of the present invention;
FIG. 13 is a schematic diagram of a structure of a multi-machine moving system according to Embodiment 6 of the present invention; and
FIG. 14 is a schematic diagram of a working process of a multi-machine moving system according to Embodiment 6 of the present invention.

In the figures: 100: Rope moving machine; 100-1: First rope moving machine; 100-2: Second rope moving machine; 110: Machine body; 111: Vehicle body; 112: Wheel; 113: Adsorption mechanism; 120: Surface connection mechanism; 121: Mechanical arm; 121-1: Threading hole; 121-2: Mechanical arm rotating shaft; 121-3: First mechanical arm plate; 121-4: Second mechanical arm plate; 121-5: Joint shaft motor; 122: Hot melt adhesive sprayer; 122-1: Nail emitter; 122-2: Nail; 123: Sprayer push rod; 123-1: Rope clip; 124: Rope clamping mechanism; 124-1: Rope clamp; 124-2: Clamp piece; 130: Rope mechanism; 131: Rope; 132: Rope tightening and loosening mechanism; 132-1: Rope winder; 140: Connection release mechanism; 200: Connection point; 210: First adhesion point; 220: Second adhesion point; 230: Adhesion point; 240: First adhesion point; 250: Second adhesion point; 300: an object; 310: First object surface; 320: Second object surface; 330: Third object surface; 400: Machine connection rope; and 410: Rope winder.

### DESCRIPTION OF EMBODIMENTS

To make the to-be-resolved technical problem, technical solutions, and beneficial effects of the present invention clearer, the present invention is further described below in detail with reference to the accompanying drawings and embodiments. It should be understood that the specific embodiments described herein are merely intended to explain the present invention, but are not intended to limit the present invention.

### Embodiment 1

A rope moving machine 100 in the present invention includes a machine body 110, a surface connection mechanism 120, and a rope mechanism 130. The rope mechanism 130 includes a rope 131 and a rope tightening and loosening mechanism 132. The surface connection mechanism 120 is mounted on the machine body 110, and the surface connection mechanism 120 is capable of connecting the rope to one or more positions of a surface (hereinafter referred to as an object surface) of an object 300, to form one or more connection points 200 on the object surface. The rope mechanism 130 connects the machine body 110 and the connection point 200 on the object surface, and the rope tightening and loosening mechanism 132 is capable of changing a length of the rope 131 between the machine body 110 and the connection point 200. The connection point 200 bears a part or all of gravity of the machine body 110 through the rope 131.

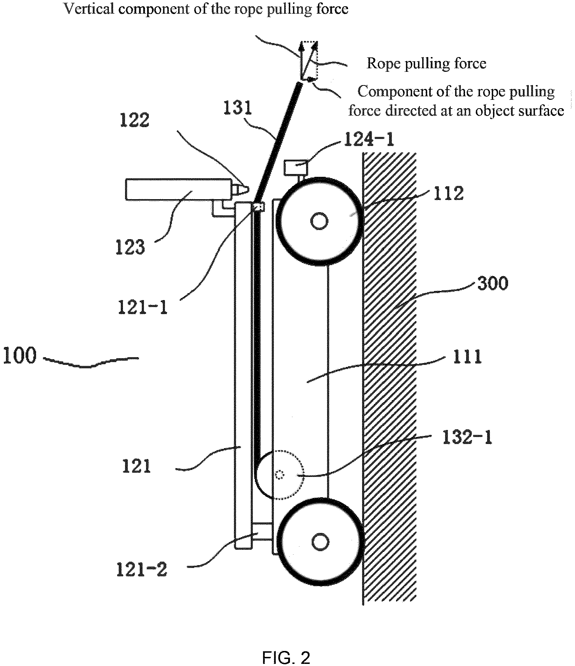

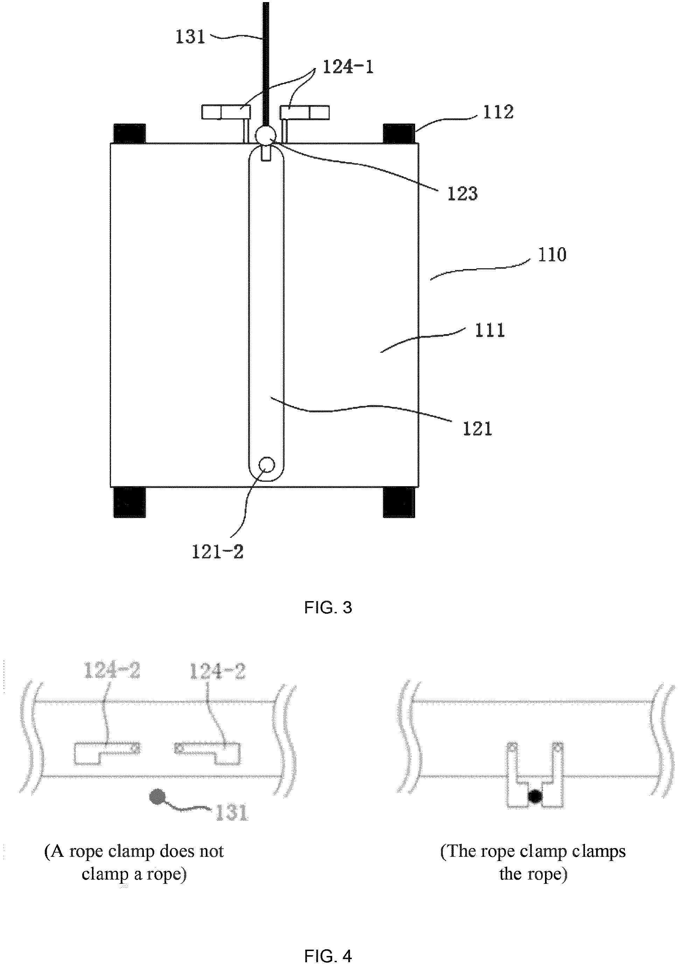

In this embodiment (FIG. 2 and FIG. 3), the machine body 110 is a vehicle body 111 in which four driving wheels 112 are mounted. The rope tightening and loosening mechanism 132 is a rope winder 132-1 mounted on the vehicle body 111. There is a rope winding wheel in the rope winder. One end of the rope is connected to the rope winding wheel, and rope tightening and rope loosening are implemented by controlling the rope winding wheel to rotate in a forward direction and rotate in a reverse direction. In this embodiment, the surface connection mechanism 120 adheres the rope to the object surface by using adhesive. The adhesive is hot melt adhesive. After being heated, the hot melt adhesive becomes liquid adhesive, and can be sprayed. After being cooled, the adhesive becomes a solid, and can produce adhesive force to connect the rope 131 and the object surface. The surface connection mechanism 120 includes a mechanical arm 121, a hot melt adhesive sprayer 122, a sprayer push rod 123, and a rope clamping mechanism 124. The mechanical arm 121 is an elongated plate. The sprayer push rod 123 is disposed at one end of the mechanical arm 121, and the hot melt adhesive sprayer 122 is disposed at a front end of the sprayer push rod 123. The hot melt adhesive sprayer 122 has functions of heating and spraying adhesive. The rope passes through a threading hole 121-1 on the mechanical arm 121. The other end of the mechanical arm 121 is connected to the vehicle body 111 through a mechanical arm rotating shaft 121-2. The mechanical arm rotating shaft 121-2 can drive the mechanical arm 121 to rotate. The surface connection mechanism 120 further includes the rope clamping mechanism 124, and the rope clamping mechanism 124 is capable of clamping the rope, so that the rope 131 forms a tensioned part and a slack part. The rope clamping mechanism 124 in this embodiment is a rope clamp 124-1. As shown in FIG. 4, the rope clamp 124-1 includes two clamp pieces 124-2, and the two clamp pieces 124-2 can rotate. When the two clamp pieces 124-2 are open, the rope clamp 124-1 does not clamp the rope 131. When the two clamp pieces 124-2 are closed, the rope 131 is clamped by the rope clamp 124-1.

The rope moving machine in this embodiment adheres the rope to the object surface by using hot melt adhesive. It is assumed that the machine is suspended by the rope on an inclined object surface, and the rope is in a tensioned state by gravity. FIG. 5a to FIG. 5e show a process of adhering the rope to the object surface.
(1) As shown in FIG. 5a, the rope clamp 124-1 clamps the rope 131. Then the rope winder 132-1 loosens the rope 131. Therefore, a rope between the rope clamp 124-1 and the rope winder 132-1 is in a slack state, while a rope above the rope clamp 124-1 is still in the tensioned state.
(2) As shown in FIG. 5b, the mechanical arm 121 swings to a specified position. The rope passes through the threading hole 121-1 on the mechanical arm 121, and therefore the mechanical arm 121 can pull the rope to rotate together. Further, the rope between the rope clamp 124-1 and the rope winder 132-1 is in the slack state, and therefore the rope in the slack state does not hinder rotation of the mechanical arm 121.
(3) As shown in FIG. 5c, the sprayer push rod 123 extends to drive the hot melt adhesive sprayer 122 to move forward. In addition, the hot melt adhesive sprayer 122 sprays a small amount of high-temperature melt adhesive, and the high-temperature melt adhesive adheres a rope at a front end of the threading hole 121-1 to a front end of the hot melt adhesive sprayer 122. Then the sprayer push rod 123 continues to extend, so that the hot melt adhesive sprayer 122 is pushed onto the object surface. Then the hot melt adhesive sprayer 122 starts to spray a large amount of high-temperature melt adhesive. The high-temperature melt adhesive adheres the rope to the object surface. The hot melt adhesive sprayer 122 stops spraying adhesive after spraying sufficient adhesive. Then the sprayer push rod 123 and the hot melt adhesive sprayer 122 begin to retract backward. The high-temperature melt adhesive is gradually cooled to form an adhesion point (namely, a connection point 200) with sufficient adhesive force. The adhesion point securely adheres the rope to the object surface. To more reliably adhere the rope to the object surface, a rope clip 123-1 may be disposed at the front end of the sprayer push rod 123, as shown in FIG. 5d. The rope clip 123-1 is mounted on the sprayer push rod 123, and includes two clip pieces, and the two clip pieces can rotate. As the two clip pieces rotate downward, the rope at the front end of the threading hole 121-1 is clamped, and therefore the sprayer push rod 123 can reliably push the rope onto the object surface, to facilitate a subsequent adhesion process.
(4) As shown in FIG. 5e, the mechanical arm 121 swings back to an intermediate position. Then the rope clamp 124-1 releases the rope. The rope moving machine is suspended below the adhesion point.

In this embodiment, the rope tightening and loosening mechanism 132 is the rope winder 132-1 mounted on the vehicle body. The rope tightening and loosening mechanism 132 may alternatively be any other structure capable of tightening and loosening the rope.

In this embodiment, the process of connecting the rope and the object surface is described by using the hot melt adhesive as an example. The rope is connected to the object surface by using the adhesive. This innovative design is a bionic design that imitates silk adhesion by a spider. The adhesive is not limited to the hot melt adhesive.

The adhesive in the present invention can establish a mechanical connection to the rope and the object surface through curing, chemical reaction, and/or another adhesion principle. The adhesive may be various types of glue, welding rods, adhesive tapes, cement pastes, or the like. After some necessary steps (for example, necessary steps for the hot melt adhesive in this embodiment are heating, spraying, cooling, and solidifying) are performed, the adhesive can form an adhesion point (namely, a connection point 200) on the object surface, and the adhesion point bears all or a part of the gravity of the machine body 110 through the rope.

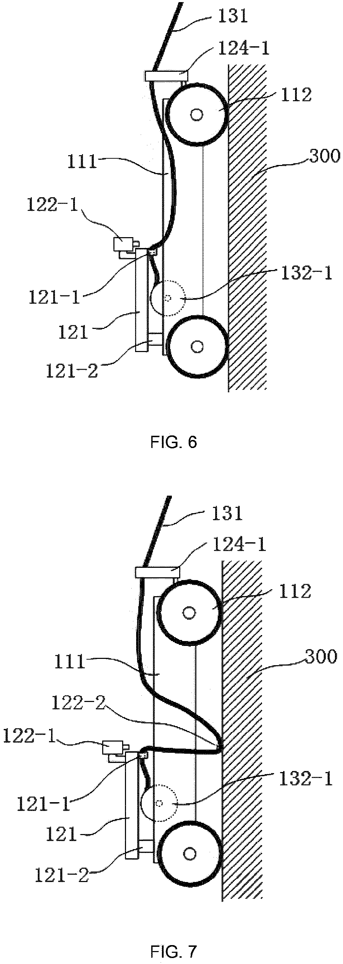

In an actual application process of the present invention, the rope may be appropriately connected to the object surface based on a status of the surface of the object 300, to form the connection point 200. For example, a mechanical connection may be used. As shown in FIG. 6, if the object surface is a wooden surface or a soft surface, the hot melt adhesive sprayer 122 and the sprayer push rod 123 may be replaced with a nail emitter 122-1. The nail emitter 122-1 can emit a high-speed nail 122-2. The nail 122-2 hits the rope at the front end of the threading hole 121-1, and hits the object surface with the rope. Therefore, the rope is fastened to the object surface by the nail 122-2, to form the connection point 200, as shown in FIG. 7. For another example, if the object surface is of a wire mesh structure, the surface connection mechanism 120 includes a plurality of hooks. The hooks are fastened to different positions on the rope, and the hook on the rope is suspended on a wire mesh to form the connection point 200.

### Embodiment 2

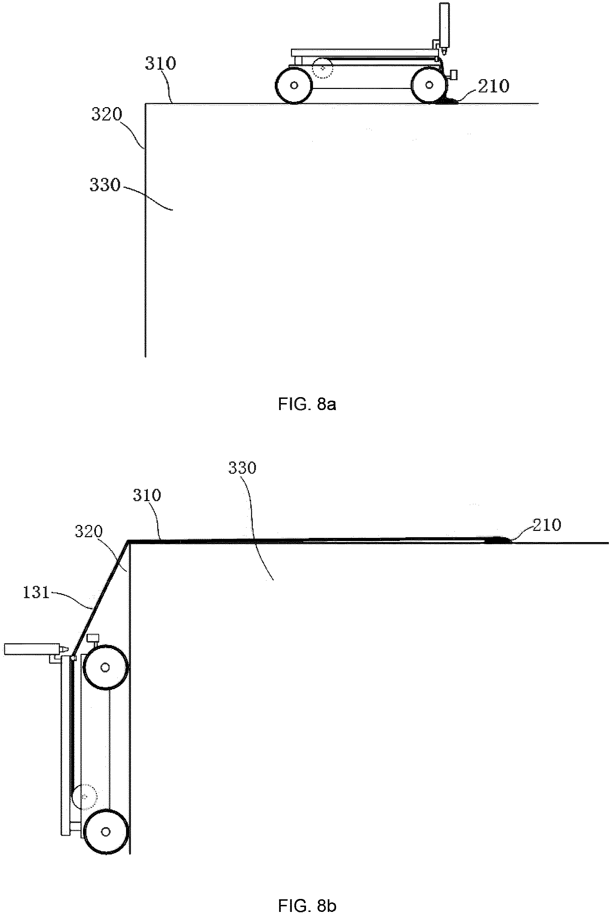

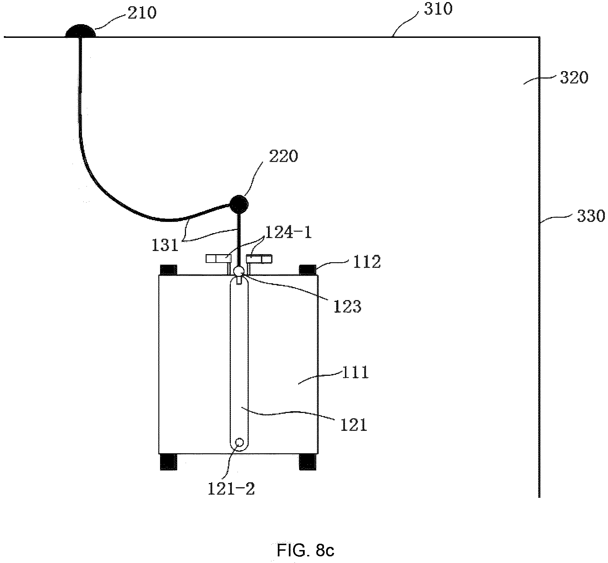

As shown in FIG. 8a, the rope moving machine in Embodiment 1 is placed on a top surface (an object surface 310 in FIG. 8a) of a building. The rope moving machine makes a first adhesion point 210 on the first object surface 310, to adhere the rope to the first object surface 310. Then the rope moving machine moves to the left to move out of the first object surface 310, and is suspended on a second object surface 320, as shown in FIG. 8b. The rope winder tightens and loosens the rope, so that the rope moving machine can quickly move up and down in a vertical direction. As shown in FIG. 8c (this figure shows a front view of the object surface 320), the rope moving machine makes a second adhesion point 220, and is suspended below the second adhesion point 220. Therefore, the rope moving machine completes lateral movement, and a movement distance is a lateral distance between the first adhesion point 210 and the second adhesion point 220.

The rope moving machine laterally moves by making a new adhesion point on the second object surface 320, and moves up and down by tightening and loosening the rope by using the rope winder.

### Embodiment 3

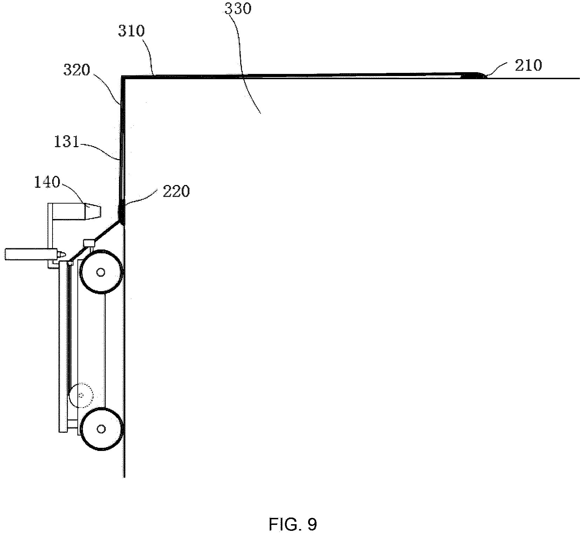

As shown in FIG. 8c, the rope moving machine can move upward by tightening the rope by using the rope winder. However, the adhesion point 220 adheres the rope to the object surface, and therefore the machine cannot move upward to a position above the adhesion point 220. This limits a range of moving up and down by the rope moving machine. To resolve this problem, a connection release mechanism 140 is added to the surface connection mechanism 120. In this embodiment, the connection release mechanism 140 is an air heater, as shown in FIG. 9. The air heater is mounted on the mechanical arm 121. The air heater blows out hot air, so that cured adhesive reaches a high temperature and melts, and the rope is separated from the object surface. Therefore, the rope moving machine can break through the limitation of the adhesion point, and continue to move upward.

In this embodiment, the connection release mechanism is implemented by an air heater. In the present invention, the connection release mechanism may alternatively be implemented in another manner, and a specific connection release method corresponds to a manner of forming the connection point 200. For example, if the connection point 200 is formed by using adhesive, the adhesive connection may be released by using an adhesive removal solution or through heating. If the connection point 200 is formed by using a nail, the connection may be released by pulling out the nail. If the connection is formed by suspending the hook on the wire mesh, the connection may be released by removing the hook.

### Embodiment 4

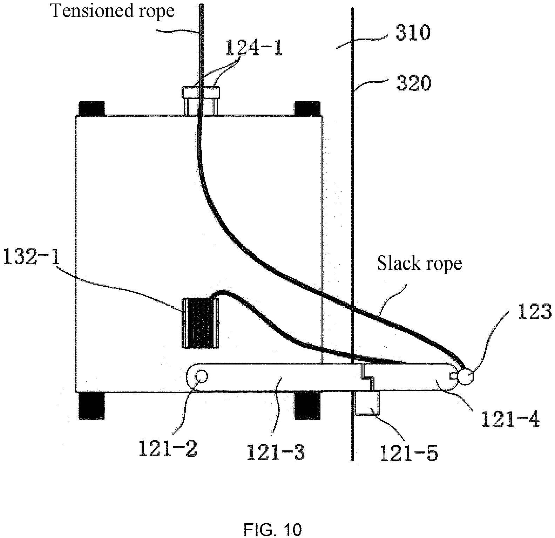

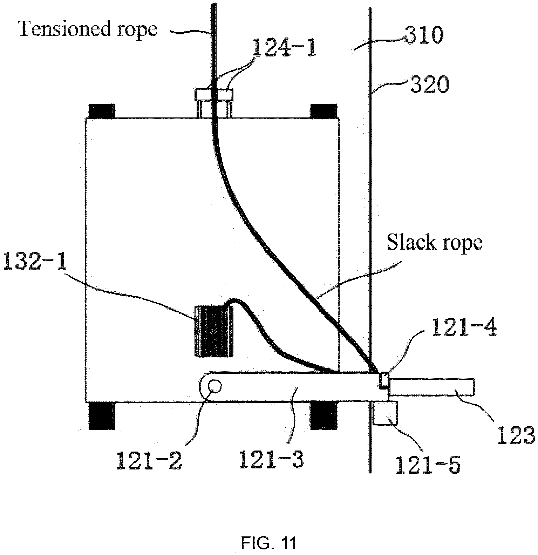

As shown in FIG. 10 and FIG. 11, in this embodiment, the first object surface 310 and the second object surface 320 are two object surfaces that are not coplanar (in this embodiment, an angle between the two object surfaces is 90 degrees). The rope moving machine is suspended on the first object surface 310. The mechanical arm 121 of the rope moving machine in this embodiment includes a first mechanical arm plate 121-3 and a second mechanical arm plate 121-4. The two arm plates are connected by using a joint shaft. A joint shaft motor 121-5 may drive the second mechanical arm plate to rotate. The sprayer push rod 123, the hot melt adhesive sprayer 122, and the threading hole 121-1 are mounted at a front end of the second mechanical arm plate.

The joint shaft motor 121-5 drives the second mechanical arm plate to rotate by 90 degrees. The second mechanical arm plate rotates to the second object surface 320 with the sprayer push rod 123 and the hot melt adhesive sprayer 122. Therefore, the rope moving machine can make an adhesion point on the second object surface 320, and then is suspended on the second object surface 320. In other words, the rope moving machine can cross two object surfaces between which there is a right angle. Therefore, the rope moving machine in the present invention can move on two object surfaces that are not coplanar.

### Embodiment 5

In the foregoing embodiment, the rope moving machine makes an adhesion point on the object surface to laterally move. A plurality of actions are required to make the adhesion point, and it takes some time to perform each action. In addition, the mechanical arm 121 has a limited length, and each adhesion point can enable the rope moving machine to laterally move only by at most a distance of one mechanical arm 121. Therefore, such a lateral movement manner is relatively inefficient.

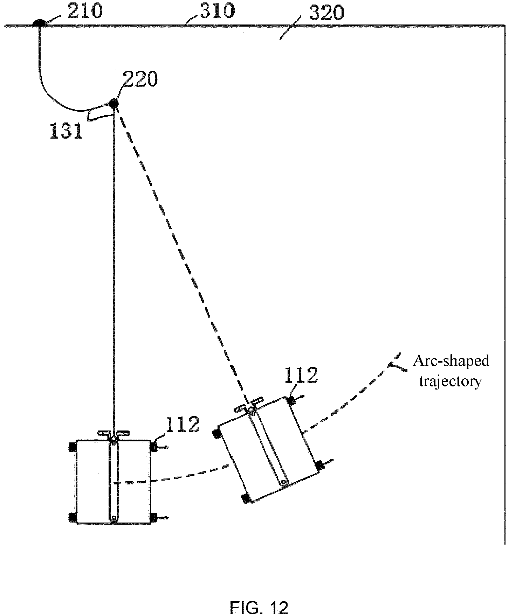

This embodiment provides a more efficient lateral movement method. As shown in FIG. 12, the rope moving machine is suspended below the second adhesion point 220. A specific angle is formed between the object surface and a rope between the second adhesion point 220 and the rope moving machine (referring to FIG. 2). Therefore, the rope applies a component (referring to rope pulling force marked in FIG. 2) directed at the object surface to the rope moving machine. Under the action of the component of the rope, contact force is produced between the wheel of the vehicle body and the object surface, and therefore friction can be produced. In this embodiment, the friction is used to drive the rope moving machine to laterally move. Each wheel is a driving wheel, and an orientation of the wheel can be changed within a range of 0°-90°. The wheel 112 is first turned to a horizontal direction, and then the wheel is driven to rotate. Driven by the friction between the wheel and the object surface, the rope moving machine can laterally move. If a length of the rope between the second adhesion point 220 and the rope moving machine is kept constant, a moving trajectory is an arc-shaped line (a dashed-line trajectory in FIG. 12). If the length of the rope is changed in a moving process, the moving trajectory is changed to a trajectory in another shape accordingly. No detailed description is provided herein. As the rope moving machine moves, the rope produces a lateral component that hinders lateral movement of the machine. When the lateral component of the rope and a lateral component of the friction of the wheel are balanced, a lateral movement distance of the rope moving machine reaches a maximum.

Obviously, greater friction between the wheel and the object surface indicates a longer lateral movement distance. To increase the friction between the wheel and the object surface, an adsorption mechanism 113 is added to the machine body 110 in this embodiment. The adsorption mechanism 113 applies adsorption force to the object surface, so that the contact force between the wheel and the object surface can be increased, and accordingly the friction can be increased, the lateral movement distance can be increased, and lateral movement efficiency can be improved. In addition, the adsorption mechanism adsorbs the rope moving machine onto the object surface, so that the rope moving machine in a suspended state is kept stable without shaking due to an external interference factor such as high-altitude cross-wind.

In the present invention, the adsorption mechanism may use a plurality of manners such as vacuum adsorption, magnetic adsorption (the object surface is made of a magnetic material), rotor reverse thrust, and viscous adhesion. In the present invention, most of gravity of the machine is balanced by the rope pulling force. Therefore, only very weak adsorption force is required to meet a requirement of friction for lateral movement. Therefore, the adsorption mechanism only needs to work in a relatively-low-power state.

### Embodiment 6

This embodiment provides a solution for improving movement efficiency by using a multi-machine moving system. The multi-machine moving system includes two or more rope moving machines. There is a machine connection rope between the rope moving machines. Further, a length of the machine connection rope between the interconnected rope moving machines is variable.

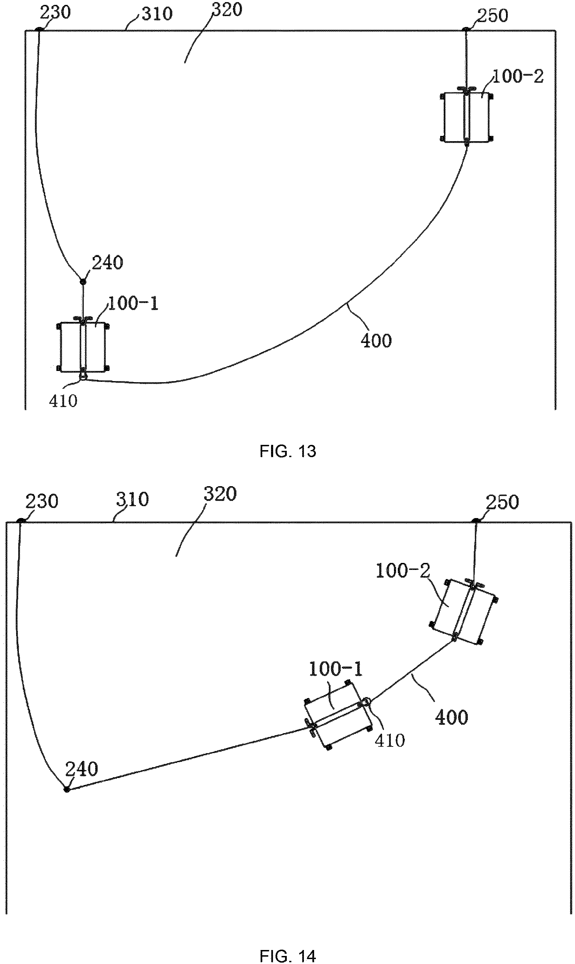

FIG. 13 shows a multi-machine moving system including two rope moving machines. A first rope moving machine 100-1 is suspended below a first adhesion point 240, and a second rope moving machine 100-2 is suspended below a second adhesion point 250. A machine connection rope 400 connects the two rope moving machines. The machine connection rope 400 in this embodiment is tightened and loosened by a rope winder 410. The rope winder 410 is mounted on the first rope moving machine 100-1. One end of the rope is connected to the rope winder, and the other end of the rope is connected to the second rope moving machine 100-2. The machine connection rope may alternatively be any other structure whose length can be adjusted.

The rope winder 410 tightens the rope, so that the machine connection rope is shortened and tensioned. As the machine connection rope is shortened, the first rope moving machine 100-1 is pulled to an upper right position, and therefore quickly and laterally moves by a long distance, and moves upward to a position above the first adhesion point 240.

The composition and the working principle of the rope moving machine in the present invention are described in detail in the foregoing embodiments. The present invention has the following advantages:
(1) In Embodiments 1-4 and Embodiment 6, the rope moving machine in the present invention does not need an adsorption mechanism, and no noise or energy consumption is generated due to the adsorption mechanism. The rope moving machine in the present invention can stay on the object surface for a long time in a state of zero power consumption and zero noise. In Embodiment 5, although the adsorption mechanism is used to increase the lateral movement distance, most of the gravity of the machine is balanced by the rope pulling force, and the adsorption mechanism only needs to produce very weak adsorption force to meet the requirement of the friction for lateral movement. Therefore, both noise and energy consumption of the adsorption mechanism can be kept very low.
(2) The rope moving machine in the present invention moves on the object surface by connecting the rope to a plurality of positions of the object surface to form a plurality of connection points, and can move between object surfaces that are not coplanar.
(3) In the present invention, the rope is connected to the object surface by using adhesive, to form the connection point. This method is a bionic design that imitates silk adhesion by a spider. In addition, this method is not limited by a material, appearance, hardness, or the like of the object surface, and therefore features extremely high applicability.

The foregoing descriptions are merely preferred embodiments of the present invention, and are not intended to limit the present invention. Any modification, equivalent replacement, improvement, and the like made within the principle of the present invention shall fall within the protection scope of the present invention.

## Claims

1. A rope moving machine, comprising a machine body capable of moving on an object, and further comprising a rope mechanism and a surface connection mechanism that are connected to the machine body, wherein the rope mechanism comprises a rope tightening and loosening mechanism and a rope, the rope tightening and loosening mechanism is connected to the rope, the surface connection mechanism connects the rope to the object to form one or more connection points on the object, the connection point bears a part or all of gravity of the machine body through the rope, and the rope tightening and loosening mechanism is capable of changing a length of the rope between the connection point and the machine body.

2. The rope moving machine according to claim 1, wherein the surface connection mechanism adheres the rope to the object by using adhesive.

3. The rope moving machine according to claim 1, wherein the surface connection mechanism connects the rope to the object through a mechanical connection.

4. The rope moving machine according to claim 3, wherein the surface connection mechanism nails the rope to the object.

5. The rope moving machine according to claim 3, wherein the surface connection mechanism comprises one or more hooks, the one or more hooks are fastened to different positions on the rope, and the hook is suspended on the object to form the connection point.

6. The rope moving machine according to claim 1, wherein the surface connection mechanism comprises a connection release mechanism, and the connection release mechanism is configured to release a connection between the rope and the object.

7. The rope moving machine according to claim 1, wherein the surface connection mechanism comprises a rope clamping mechanism, and the rope clamping mechanism is capable of clamping the rope, so that the rope forms a tensioned part and a slack part.

8. The rope moving machine according to claim 1, wherein the machine body comprises an adsorption mechanism, and the adsorption mechanism adsorbs the machine body onto the object.

9. The rope moving machine according to claim 1, wherein the machine body comprises a mobile mechanism, and the mobile mechanism drives the machine body to move on the object.

10. The rope moving machine according to claim 1, wherein the surface connection mechanism comprises a mechanical arm, an adhesive sprayer, a sprayer push rod, and a rope clamping mechanism, the rope clamping mechanism is configured to clamp the rope, so that the rope forms a tensioned part and a slack part, the mechanical arm is connected to the machine body through a rotating shaft, and the adhesive sprayer and the sprayer push rod are disposed on the mechanical arm to adhere the slack rope to the object.

11. A multi-machine moving system, comprising two or more rope moving machines according to any one of claims 1 to 10, wherein at least two different rope moving machines are interconnected through a machine connection rope, and a length of the machine connection rope is adjustable.
